# EUROPÄISCHE PATENTSCHRIFT

(11) **EP 3 253 722 B1**
(45) Veröffentlichungstag und Bekanntmachung des Hinweises auf die Patenterteilung: **10.02.2021**
(21) Anmeldenummer: 15819795.4
(22) Anmeldetag: 04.12.2015
(51) Int. Cl.: C04B 26/06, F24D 3/14, E04C 2/04

(54) **BAUSTOFFMISCHUNG**
BUILDING MATERIAL MIXTURE
MÉLANGE DE MATÉRIAUX DE CONSTRUCTION

(30) Priorität: 04.12.2014 DE 102014117938
(43) Veröffentlichungstag der Anmeldung: 13.12.2017
(73) Patentinhaber: HEKA graphit.technology GmbH, 19288 Ludwigslust (DE)
(72) Erfinder: DUEWEL, Jens, 19288 Ludwigslust (DE)
(74) Vertreter: Reitstötter Kinzebach
(86) Internationale Anmeldenummer: PCT/EP2015/078740
(87) Internationale Veröffentlichungsnummer: WO 2016/087673

(56) Entgegenhaltungen:
- EP-A1- 2 476 658
- EP-A2- 1 189 297
- DE-A1- 10 049 230
- DE-B- 1 236 392
- US-A- 3 626 149

## Beschreibung

Die Erfindung betrifft eine Baustoffmischung.

Eine gattungsgemäße Baustoffmischung wird zum Beispiel als Spachtel-oder Putzmasse eingesetzt. Insbesondere werden solche Materialien auch verwendet, um Flächenheizungen zum verputzen. Eine Flächenheizung besteht zum Beispiel aus einem Rohrleitungsregister, das in einer Wand, Decke oder einem Boden (zum Beispiel als Fußbodenheizung) eines Raumes ausgelegt ist und dann von der abgebunden Baustoffmischung umschlossen ist. Solche Flächenheizungen erlauben es einen Raum mit geringerer Vorlaufwärme zu temperieren.

Da in solchen Heizsystemen keine große Temperaturdifferenz besteht wäre es günstig, eine Spachtel- oder Putzmasse zu haben, die eine hohe Wärmeleitfähigkeit aufweist und die auch bei geringeren Temperaturunterschieden einen schnellen Wärmetransport über die gesamte Fläche erlaubt, da oftmals die Wärmeenergie nur partiell von der Heizquelle in die Flächenheizung eingetragen wird.

Die DE 10049230 A1 beschreibt graphithaltige Estriche für Fußbodenheizungen. Das Estrichmaterial besteht aus hydraulischem Bindemittel und Quarzsand.

Die EP 2 476 658 A1 beschreibt wärmeleitfähige Estriche, die ein hydraulisches Bindemittel und 1 bis 4 Gew.% Graphit enthalten.

Die EP 1 189 297 A2 beschreibt eine Harzzusammensetzung für ein Trennelement einer Brennstoffzelle, die ein elektrisch leitfähiges Mittel enthält.

Es ist Aufgabe der Erfindung eine Baustoffmischung vorzuschlagen, die im abgebundenen, einsatzbereiten Zustand einen Material mit hoher Wärmeleitfähigkeit ausbildet.

Zur Lösung dieser Aufgabe schlägt die Erfindung eine Baustoffmischung, insbesondere Spachtel- oder Putzmasse vor, dessen Trockenmasse zwischen 30 und 95 Gew[%] Graphit, zwischen 4 und 30 Gew [%] Acrylat-Bindemittel und zwischen 0 und 40 Gew[%] Funktionsadditive aufweist. Die Summe der drei Bestandteile ergibt 100 Gew[%] .

Dabei löst diese Erfindung nicht nur die eingangs gestellte Aufgabe, sondern die vorgeschlagene Baustoffmischung besitzt günstiger Weise auch elektromagnetische Wellen abweisende Eigenschaften.

Darüber hinaus lässt sich die vorgeschlagene Baustoffmischung als Airless- Spachtel- und Putzmasse für die Gebäudetechnik einsetzen.

Die erfindungsgemäße Baustoffmischung zeichnet sich durch eine Zusammensetzung von mindestens zwei, bevorzugt drei Bestandteilen aus. Die Anteile der Bestandteile sind durch Intervalle definiert, die durch eine obere und untere Grenze beschrieben ist.

So beträgt die Obergrenze des Anteilintervalls an Graphit 95, 90, 85 oder 80 Gew[%]. Als Untergrenze gelten zum Beispiel folgende Werte: 30, 35, 40, 45, 50 Gew[%]. Die Offenbarung dieser Anmeldung umfasst die Menge von allen Intervallen, die durch alle mögliche Kombinationen der vorgenannten Ober- und Untergrenzen besteht.

Des Weiteren beträgt die Obergrenze des Anteilintervalls an Bindemittel 30, 25 oder 20 Gew[%]. Als Untergrenze gelten zum Beispiel folgende Werte: 4,7,10,15,20 oder 25 Gew[%] .Die Offenbarung dieser Anmeldung umfasst die Menge von allen Intervallen, die durch alle möglichen widerspruchsfreien Kombinationen der vorgenannten Ober- und Untergrenzen besteht.

Die Obergrenze des Anteilintervalls an Funktionsadditive beträgt 40, 35, 30, 25 oder 20 Gew[%]. Als Untergrenze gelten zum Beispiel folgende Werte: 0, 3, 6, 10, 13, 16, 20, 25 oder 30 Gew[%]. Die Offenbarung dieser Anmeldung umfasst die Menge von allen Intervallen, die durch alle möglichen widerspruchsfreien Kombinationen der vorgenannten Ober- und Untergrenzen besteht.

Insbesondere umfasst die Offenbarung dieser Anmeldung eine Kombination der vorgenannten Intervalle mit der Maßgabe, dass die Summe der drei Bestandteile 100 Gew[%]ergibt.

Insbesondere wurde hierbei eine Baustoffmischung entwickelt, die, als Spachtelmasse eingesetzt, eine um bis zu 5-fach höhere Wärmeleitfähigkeit gegenüber den Standard-Spachtelmassen aufweist. Eine solche Spachtelmasse eignet sich insbesondere hervorragend für die Herstellung von Wand- und Deckentemperiersystemen. Diese hohe Wärmeleitfähigkeit der neuen Spachtelmasse führt zu einer guten Wärmeverteilung zwischen den im Spachtel eingebetteten Heizrohren und somit zu einer isothermen und energetisch vorteilhaften Wärmeabstrahlung der Wandflächen.

Des Weiteren ist in dem Vorschlag vorteilhafter Weise vorgesehen, dass als Graphit verschiedene Graphitmodifikationen wie expandierte Graphitflocken, Foliengraphit, Naturgraphit oder synthetischer Graphit vorgesehen ist. Der erfindungsgemäße Vorschlag lässt sich mit einer Vielzahl verschiedener Varianten von Graphit realisieren, was für die Vielfältigkeit der Erfindung spricht. Die hier beschriebene Liste ist nicht abschließend sondern nur beispielhaft.

Als Bindemittel ist Acrylat vorgesehen.

Des Weiteren ist vorgesehen, dass als Funktionsadditive mindestens eines der nachfolgend genannten Materialien vorgesehen ist: Trasspulver, Glas-Bubbles, Aluminiumoxid, Entschäumer, Magnetit, Verdickungsmittel Zellulose. Die Erfindung beschränkt sich dabei nicht nur auf ein Funktionsadditiv, sondern kann durchaus auch mindesten zwei Funktionsadditive, mit jeweils gleicher oder unterschiedlicher Anteil, aufweisen. Zellulose zum Beispiel bildet eine netzartige, oder geflechtartige Bewährungsstruktur aus, die die Stabilität einer aus der Baustoffmischung erzeugten Schicht erhöht. Der Einsatz von Magnetit, einem Eisenoxid, verbessert die elektromagnetische Abschirmung einer Schicht, die aus der Baustoffmischung hergestellt ist.

Der Einsatz von Trasspulver bewirkt, dass hierüber die Oberflächenfestigkeit der sich ausbildenden Schicht beeinflusst bzw. verbessert werden kann. Der Einsatz von Glas-Bubbels, die als Mikroperlen im µ-Bereich eingesetzt werden, führen zu einer pastösen Grundstruktur der Baustoffmischung. Aluminiumoxid hat, aufgrund seiner isolierenden Wirkung, nur einen schlechten Einfluss auf die elektromagnetische Abschirmung, verbessert aber erheblich die Wärmeleitfähigkeit. Der Einsatz eines Entschäumers vermeidet, dass während des Anmischens mit Wasser Schaum entsteht, was die weitere Verarbeitung behindern kann. Durch die Verwendung eines Verdickungsmittels wird erreicht, dass der verarbeitungsfertige Baustoff nicht an der Wand abläuft, sondern an dieser verbleibt. Kunststoffadditive bewirken, dass dadurch die Haftung auf dem Untergrund eingestellt werden kann. Des Weiteren kann durch Kunststoffadditive auch der Verlauf reguliert werden, es kann auch als Verdickungsmittel eingesetzt werden.

Insbesondere schlägt die Erfindung in einer weiteren Alternative vor, dass auch bekannte, elementare Zuschlagstoffe derzeitiger Spachtel- und Putzmassen wie Zement, Sand, Gips, Kalk und Lehm nicht verwendet werden. Der grundsätzliche Aufbau der neuen Baustoffmischung bildet einen speziellen Werkstoffverbund, bestehend aus Graphit, einem Bindemittel und einem Funktionsadditiv.

In einer vorteilhaften Ausgestaltung ist vorgesehen, dass die (verarbeitete, z.B. mit Wasser oder einer anderen Flüssigkeit oder Dispersion abgebundene) Baustoffmischung als Schicht aufgetragen in einer Schichtdicke von ca. 1,5 mm eine Schirmdämpfung von mehr als 10 dB, insbesondere mehr als 30, 40 oder 50 dB aufweist. Auf die hervorragenden elektromagnetische Strahlung schirmende Eigenschaft der Baustoffmischung bzw. einer aus der Baustoffmischung hergestellten Schicht wird noch an anderer Stelle in dieser Anmeldung verwiesen.

Geschickter Weise ist vorgesehen, dass die (verarbeitete, zB mit Wasser oder einer anderen Flüssigkeit oder Dispersion abgebundene) Baustoffmischung eine Wärmeleitfähigkeit λ>1W/(mK), insbesondere λ>2W/(mK) aufweist. Insbesondere wurden an Schichten, die mit der erfindungsgemäßen Baustoffmischung hergestellt worden sind, Wärmeleitfähigkeit λ>3W/(mK), λ>4W/(mK) , λ>5W/ (mK), λ>6W/ (mK), λ>7W/ (mK), λ>8W/ (mK) oder λ>9W/ (mK) realisiert.

Der erfindungsgemäße Vorschlag kombiniert überraschenderweise eine hohe elektromagnetische Schirmung mit hoher Wärmeleitfähigkeit, wie dies gerade im Wohn- oder Industriebau benötigt wird. Allein schon dieser Doppelnutze ist wertvoll, denn bei bekannten Systemen waren zwei verschiedene Elemente/Systeme miteinander zu kombinieren, was entsprechend Kosten und Platz benötigte.

Die Erfindung umfasst aber auch eine Flächenheizung, bestehend aus einer Tragstruktur und einer Heizquelle sowie einer Abdeckschicht, wobei die Abdeckschicht aus einer Baustoffmischung wie beschrieben gebildet ist. Als Tragstruktur ist zum Beispiel eine Wand, ein Boden, eine Decke, eine Tragplatte oder ähnliches vorgesehen. Die Flächenheizung kann dabei als mobiles Modul, welches für den Einbau bestimmt ist, ausgebildet sein, oder aber die Flächenheizung wird aus den einzelnen Bestandteilen in dem Gebäude Stück für Stück realisiert. Die Erfindung deckt beide Varianten ab. Als Heizquelle ist dabei zum Beispiel eine Warmwasserheizung vorgesehen, die eine Rohrleitung oder Rohrregister durchströmt und so die Wärmeenergie herantransportiert. Eine andere Variante der Heizquelle ist eine Widerstandsheizung, die von einer entsprechenden (elektrischen) Stromquelle gespeist wird. Üblicherweise ist die Abdeckschicht dem zu beheizenden Raum zugewandt.

In einer weiteren bevorzugten Ausführungsform ist vorgesehen, dass
die Heizquelle in der Abdeckschicht integriert ausgebildet ist. Auch hier gibt es mehrere Varianten. Zunächst ist es möglich, dass das Rohrregister beidseitig in der Abdeckschicht eingebettet ist, also von dem Baustoff vorder- und rückseitig umschlossen ist. In eine andere Variante wird die Heizquelle gebildet von dem Graphitanteil in der Baustoffmischung, die einen elektrisch wirksamen Widerstand darstellt. Diese Variante hat insbesondere den Vorteil, dass ein separates Verlegern der Rohrleitungen nicht notwendig ist und hierüber zum Beispiel aus regenerativer Systemen produzierte Überschussstrom sinnvoll genutzt werden kann. Üblicherweise reicht hier eine Gleichspannung im Bereich der Schutzkleinspannung zum Betrieb einer solchen elektrisch betriebenen Flächenheizung aus. Eine solche Anordnung realisiert drei Vorteile in sich: zum einen kann ohne aufwändigen Leitungsbau (es wird nur eine Stromleitung benötigt) eine Flächenheizung realisiert werden (dies eignet sich dann zum Beispiel auch für Sanierungsfälle), die ein angenehmes Temperaturniveau in einem zu beheizenden Raum zur Verfügung stellt. Gleichzeitig wird die Wärme auf der Fläche schnell und gleichmäßig verteilt und das eingesetzte Material der Baustoffmischung gewährleistet eine sehr effiziente Abschirmung von elektromagnetischer Strahlung.

Die Erfindung umfasst daher auch die vorteilhafte Verwendung einer Baustoffmischung, beziehungsweise eines hieraus hergestellten Baustoffes als Abschirmmaterial für elektromagnetische Strahlung und/oder als Wärmeenergie verteilendes Material. Geschickterweise realisiert der Baustoff bzw. die Baustoffmischung beide Eigenschaften, ohne aber die Erfindung hierauf beschränken zu wollen. Vorteilhafterweise wird auch schon eine der vorbeschriebenen Eigenschaften durch die Baustoffmischung erreicht.

Des Weiteren umfasst die Erfindung auch ein Bauelement, wie z.B. Fassadenplatte, Vormauerstein, Wärmespeicherelement, welches zumindest teilweise aus einer Baustoffmischung wie beschrieben gebildet ist.

Die (trockene) Baustoffmischung ist eine im Handel verfügbare und genutzte Ausgestaltung der Erfindung, wenngleich sich die beschriebenen physikalischen Eigenschaften erst bei einer Schicht, die aus der beschriebenen Baustoffmischung gebildet ist, nachweisbar sind.

Daher umfasst die Erfindung auch allgemein einen Baustoff, welcher zumindest teilweise aus einer Baustoffmischung, wie vorbeschrieben, gebildet ist.

Bei einer bevorzugten Ausgestaltung des Vorschlags ist vorgesehen, dass der Baustoff zwischen 20 und 60 Gew[%] Wasser enthält.
Für den Wasseranteil an dem Baustoff wird ein Intervall angegeben, das durch eine obere und untere Grenze beschrieben ist. Als Obergrenze sind zum Beispiel dabei folgende Werte vorgesehen: 70%, 65%, 60%, 55%, 50%, 45%, 40%. Als Untergrenze gelten zum Beispiel folgende Werte: 10%, 15%, 20%, 25%, 30%, 35%.

Die Offenbarung dieser Anmeldung umfasst die Menge von allen Intervallen, die durch alle mögliche, widerspruchsfreien Kombinationen der vorgenannten Ober- und Untergrenzen besteht.

Insbesondere ist in einer vorteilhaften Variante vorgesehen, dass der Baustoff bzw. die Baustoffmischung ein Funktionsadditive aufweist, dass die Vernetzung des Wassers verbessert und somit den Wasseranteil an der Verarbeitung waren Baustoff signifikant reduziert.

Vorteilhafter Weise ist vorgesehen, dass der Baustoff verarbeitungsbereit vorgehalten wird. In dieser Variante ist vorgesehen, dass der Baustoff mit konstanter Rezeptur vorgehalten wird und durch diese gleichbleibende Rezeptur auch die Verarbeitung des Baustoffes mit Maschinen, wie zum Beispiel mit Airless-Auftragmaschinen zuverlässig durchgeführt werden kann.

Daher findet man im Handel neben der trockenen Baustoffmischung, die mit Wasser anzurühren ist, auch den nassen, pastösen Baustoff, der vorzugsweise unter Luftabschluss gelagert wird.

Eine erste Ausgestaltung der erfindungsgemäßen Baustoffmischung wurde hinsichtlich ihrer Graphitmodifikation und der Verarbeitbarkeit zu dünnen Schichten untersucht. Es wurde gemahlener Foliengraphit mit einer durchschnittlichen Partikelgröße von 3.000 µm eingesetzt. Dieser Foliengraphit wird aus Graphitfolien, die aus expandierten Graphitflocken hergestellt werden, in einer Schneidmühle auf die geforderte Korngröße gemahlen.

Mit einer solchen Baustoffmischung können Schichten, aber nicht dünne Schichten mit ausreichend hoher Qualität hergestellt werden. Durch die Zumischung der großen Graphitpartikel ist auch die Herstellung von Oberflächen in der Güteklasse von Q3 - Q4 mit diesen Mischungen nicht realisierbar. Verkleinert man aber die Partikelgröße der Graphitpartikel, so wird auch diese Güteklasse bei der Verarbeitung erreicht.

Zur Umsetzung dieser Entwicklung wurden eine Reihe von Versuchsmischungen hergestellt, wobei die jeweils ersten Massenansätze zunächst handwerklich gemischt, verarbeitet und geprüft wurden. In Abhängigkeit der jeweils erzielten Ergebnisse erfolgten dann die maschinentechnischen Versuche und die Messung der Wärmeleitfähigkeit und Schirmdämpfung.

In einer ersten Versuchsmischung 1 (siehe Tabelle) wurde ausschließlich expandierte Graphitflocken mit einer durchschnittlichen Korngröße von rd. 200 µm - 2.000 µm und ein Bindemittel vom Typ 5/13 verwendet (puderförmiges Bindemittel auf Acrylatbasis, Handelsname ACRONAL S 631 P). Der Anteil der Graphitflocken betrug in dieser Mischung rd. 80 Gew.% und der Anteil des Bindemittels rd. 20 Gew.%. Die Anmischung erfolgte handwerklich im Eimer mit einer Kelle. Der Wasserwert wurde so eingestellt, dass auf einer Trockenmischung von 12 kg rd. 8 l Wasser zugegeben wurden (Versuchsmenge 20 kg). Die notwendige hohe Zugabe an Wasser war auf die sehr hohe Wasseraufnahme der expandierten Graphitflocken zurückzuführen. Der Auftrag dieser Versuchsmasse auf eine Gipskartonplatte erfolgte mit einer Glättkelle. Die Schichtdicke betrug rd. 4 mm, die Trockenzeit rd. 72 h.

Für die Versuchsmischung 2 wurde ein höher vernetzendes Bindemittel vom Typ 1/13 (flüssiges Bindemittel auf Acrylatbasis) gewählt, welches mit einer höheren mechanischen Festigkeit aushärtet. Zudem wurden die expandierten Graphitflocken durch gemahlenen Naturgraphit und synthetischen Graphit ersetzt. Gemahlener Naturgraphit weist eine höhere und synthetischer Graphit eine wesentliche höhere Scherfestigkeit auf, als die vorab verwendeten expandierten Graphitflocken.

Somit war die Versuchsmischung 2 dadurch gekennzeichnet, dass sie aus rd. 15 Gew. % Naturgraphit und rd. 30 Gew. % synthetischen Graphit bestand. Zur Sicherstellung einer guten Partikelbindung wurde der Anteil des Bindemittels von 20 Gew. % auf 25 Gew. % erhöht. Zudem wurde in dieser Mischung zusätzlich der Leichtfüllstoff Trasspulver (30 Gew. %) verwendet. Dieser Füllstoff verbessert die Plastizität der Spachtelmasse und trägt dadurch zur Minderung der Trockenrissbildung bei. Durch diese Zusammensetzung der Mischung konnte die Zugabe von Wasser bei einer Trockenmasse von 12 kg auf 7 l reduziert werden.

In einer dritten Mischung (Versuchsmischung 3) wurde ein Entschäumer (Foamstar) eingebracht um die Schaumbildung zu vermeiden und das Aufschwimmen des Naturgraphits zu verhindert bzw. zu minimieren. Die Graphitanteile wurden gegenüber der Versuchsmischung 2 in Summe von 45 Gew. % auf 60 Gew. % erhöht und die Anteile des Bindemittels von 25 Gew.% auf 6 Gew.% reduziert. Vorab durchgeführte orientierende Versuche in Form von Testmischungen mit einem Bindemittelanteil von 12,5 Gew. % zeigten keine signifikanten Verbesserungen im Aufschäumverhalten, wenn ein Rührwerk zum Anmischen verwendet wurde. Neben der deshalb vorgenommenen Reduktion des Bindemittels auf 6 Gew. % wurden in der Mischung 3 zusätzlich ein Verdickungsmittel und geringe Mengen Zellulose zur Erhöhung der Geschmeidigkeit der Spachtelmischung beigegeben. Das Trasspulver aus der Versuchsmischung 2 wurde durch leichtere Glas-Bubbles ersetzt, die sich mit ihrer Eigenschaft als Verarbeitungshilfsmittel wie auch als Leichtfüllstoff in der Bauchemie bewährt haben.

Als Ergebnis dieser modifizierten Mischungszusammensetzung konnte festgestellt werden, dass sich die Versuchsmischung 3 sehr gut handwerklich wie maschinell herstellen und mit einem handelsüblichen Airlessgerät gut austragen ließ. Die Oberflächen zeichnen sich durch geringe Rissbildung bei der Trocknung der Mischungen aus und führen zu einer Verbesserung in der jeweiligen Oberflächengüte.

Aufgrund der guten Eignung der Versuchsmischung 3 in der Herstellung und Verarbeitung wurde mit dieser Mischung eine Reihe von anwendungsorientierten Untersuchungen durchgeführt. Mit diesen Untersuchungen sollte geprüft werden, inwieweit diese graphitmodifizierte Spachtelmasse wichtigen Anforderungen in der Praxis gerecht wird.

Bei diesen Untersuchungen konnte festgestellt werden, dass die Versuchsmischung 3 bei einer Auftragsdicke von 3 mm binnen 24 h aushärtet und mechanisch sehr gut nachbearbeitet werden kann. Durch das Schleifen der Oberfläche war eine Oberflächengüte in der Qualitätsstufe 3 gut und sicher erreichbar.

In weiteren Versuchen wurde das Versackverhalten der Mischung als Folge hoher Schichtdicken geprüft. Hierzu wurden einlagige Putzschichten von 20 mm ohne Stützgewebe auf GK-Fläche. Als Ergebnis aus diesen Versuchen konnte eine ausreichend hohe innere Steifigkeit dieser Versuchsmischung festgestellt werden.

Mit Blick auf die möglichen Anwendungen einer graphitmodifizierten und airlessfähigen Spachtelmasse in der Gebäudesanierung, wurden mit der Versuchsmischung 3 eine Reihe von Versuchen zur Haftung auf häufig vorkommende Baumaterialien durchgeführt.

Generell konnte festgestellt werden, dass die Haftung dieser Spachtelmasse auf den getesteten Untergründen als handwerklich sehr gut zu bezeichnen war.

Der Abreißversuch hat zu einem positiven Ergebnis geführt. Das bei diesem Versuch auf die Spachteloberfläche mit einem Standard-Tapetenklebstoff aufgebrachte Tapetenvlies (Dicke 2 mm) wurde beim Abziehen gespalten. Dieses Ergebnis stellte sich ein, unabhängig davon, ob das Vlies mit oder ohne Grundierung auf die Oberfläche aufgebracht wurde. Mit diesem Versuch konnte somit auch gezeigt werden, dass die Versuchsmischung 3 über eine für Tapeten, Vliese und Farben ausreichend hohe Kohäsionsfestigkeit verfügt.

Zur Ermittlung der Wärmeleiteigenschaften der Versuchsmischung 3 wurde jeweils ein Wand- und Fußboden-Temperiersystem aufgebaut. Die Nuten der Temperierelemente, in die die Rohre eingelegt wurden, sind beim Wandflächensystem alternativ sowohl handwerklich mit einer Glättkelle, als auch mit dem Airlessverfahren (Airlessgerät vom Typ Inomat M8) ausgefüllt worden.

Zur Charakterisierung der Versuchsmischung 3 hinsichtlich der wärmetechnischen Eigenschaften, wurde das hergestellte Fußbodensystem temperiert und mittels der Thermographie beurteilt. Anhand der Thermographieaufnahmen konnte bei dem Fußbodensystem eine gleichmäßige und homogene Erwärmung der Fläche festgestellt werden.

Es ist ein Vorteil der Erfindung, dass die vorgeschlagene Baustoffmischung eine hohe Wärmeleitfähigkeit aufweist. Diese hohe Wärmeleitfähigkeit der Spachtel- bzw. Putzmasse führt dazu, dass die Schimmelbildung in Gebäuden reduziert wird. Vorzugsweise tritt die Schimmelbildung in Gebäuden in Raumecken auf, deren Wandtemperatur etwas niedriger ist als die der angrenzenden Wände. Diese Temperaturdifferenzen (≥ 3K) werden durch die hohe Wärmeleitfähigkeit der Spachtel- oder Putzschicht reduziert, wodurch sich auch die Schimmelpilzbildung zwangsläufig reduziert.

Der in der erfindungsgemäßen Baustoffmischung eingesetzte Graphit erhöht erheblich die elektrische Leitfähigkeit. Dadurch vermindert sich das Fogging. Als Fogging-Effekt, auch Schwarzstaub oder magic-dust genannt, bezeichnet man die Schwarzverfärbung von Räumen in Gebäuden. Der Effekt tritt in beheizten Wohnungen meistens zur Winterzeit auf. An der Zimmerdecke oder an einer Wand setzt sich ein flächiger schwarzer Belag fest. Die auf der Wand aufgetragene, elektrisch leitfähige Schicht ist geerdet und bildet daher keine elektrostatisch anziehende Fläche. In der Luft schwebende Schmutzpartikel, gegebenenfalls auch polymere Weichmacherpartikel, die den Staub binden, setzen sich bei Verwendung der erfindungsgemäßen Baustoffmischung mit erheblich geringerer Wahrscheinlichkeit auf der Wand ab und verschmutzen diese.

Auf Basis der Versuchsmischung wurden Messungen bezüglich der Schirmdämpfung vorgenommen. Zur Durchführung dieser Messungen wurden die geforderten Muster auf PMMA-Platten in der Größe von 120 mm x 120 mm x 2 mm bzw. auf Gipskarton-Platten in der Größe der PMMA-Platten und in der Größe von 500 mm x 500 mm x 12,5 mm erstellt. Die Prüfungen erfolgten nach den Normen ASTM D 4935-2010 und IEEE-STD 299-2006. Die Messungen wurden in einem sehr breiten Strahlungsfenster, d. h. im Bereich von 20 kHz bis 18 GHz veranlasst.

Zur weiteren Orientierung bei der Entwicklung der Spachtelmassen haben wir auch ein Glasfasergewebe mit der Spachtelmasse beschichtet.

Es konnte festgestellt werden, dass die im Rahmen des Projektes entwickelte Versuchsmasse 3 über eine beachtliche Schirmdämpfung von bis zu 10 dB verfügt. Dies bedeutet, dass mit dieser Airless-Spachtelmasse, bei einer Schichtdicke von 1 mm auf einer 12,5 mm dicken GK-Platte, eine Schirmung von 90 % der Strahlung im Bereich von 10 GHz bis 18 GHz erreicht werden kann. Die werkstofftechnische Einordnung dieses beachtenswerten Ergebnisses zeigt, dass mit den schirmenden Eigenschaften der Versuchsmischung 3 die diesbezüglichen Eigenschaften sämtlicher marktgängiger Standard-Spachtelmassen, die nahezu keine Schirmdämpfung aufweisen, deutlich übertroffen wurden.

In einer neuen Versuchsmischung 4 wurden die rd. 30 Gew. % Glas-Bubbles zur Verbesserung der Wärmeleitfähigkeit durch rd. 30 Gew. % Aluminiumoxidpulver ersetzt. Die sich in der Versuchsmischung 3 bewährten Zusatzstoffe wie der Entschäumer (Foamstar), das Verdickungsmittel (Pangeel FF) und die Zellulose (Tylose) wurden weiterhin verwendet. Ebenso wurden die jeweils verwendeten Einwaagen dieser Zusatzstoffe in der neuen Mischung nicht verändert Anzumerken sei in diesem Zusammenhang, dass im Vorfeld auch Versuche mit zwei unterschiedlichen Zellulosetypen (Tylose 150.000 und Tylose 300) durchgeführt wurden. Anhand dieser Versuche konnte festgestellt werden, dass die Verwendung der Tylose 300 (kürzere Zellulosefasern kleiner als 1 mm) zu einem besseren Glättverhalten der aufgetragenen Spachtelmasse führt.

Bei der handwerklichen und maschinentechnischen Herstellung wie auch Verarbeitung dieser neuen Versuchsmischung 4 waren keine nennenswerten Unterschiede zur Mischung 3 zu erkennen. Festzustellen war eine geringfügige Eindickung der Masse, bei gleichem Wassergehalt. Beim Auftragen der Mischung als Wand- und Bodenspachtel fiel diese etwas höhere Viskosität jedoch nicht ins Gewicht. Die Mischung 4 wurde wiederum auf GK-Wandflächen handwerklich und mittels Airless aufgetragen. Der Spachtelauftrag konnte nach einer Trockenzeit von 24 h sehr sauber geschliffen werden. Die hierbei erzielte Oberflächengüte lag in der angestrebten Qualitätsstufe 3 - 4. Die Versuche zur Aufnahme von Farben, Tapeten und Fliesen, bei denen jeweils handelsübliche Kleister und Fliesenkleber verwendet wurden, zeigten, dass sich die Oberfläche hierfür ebenfalls sehr gut eignet. Anhand von Haftzugprüfungen wurde die Abreißfestigkeit dieser Versuchsmischung ermittelt. Bei diesen Prüfungen wurden, im Gegensatz zu den vorab genannten Erkenntnissen und Ergebnissen, zu niedrige Festigkeiten gemessen. Auch bei diesen Messungen konnte festgestellt werden, dass die Verwendung des systemzugelassenen Epoxidharzklebstoffs, der zur Verklebung des Haftzugprüfstempels auf die gespachtelte Oberfläche verwendet wurde, zu einem Adhäsionsversagen der Verbindung Klebstoff / graphitmodifizierter Spachtel führt. Als eine Ursache ist anzunehmen, dass der Aufbau dieses Klebstoffs aus sehr großen Epoxidharz-Makromolekülen, in Verbindung mit der sehr schnellen chemischen Vernetzung diese Klebstoffs, nicht geeignet ist, in die Oberfläche der graphitmodifizierten Spachtelmasse ausreichend tief und schnell einzudringen, um die für eine hohe Abreißkraft erforderlichen physikalischen, chemischen und mechanischen Verbindungen aufzubauen.

Bei der Versuchsmischung 5 wurde im Gegensatz zur Versuchsmischung 4 das Funktionsadditiv Aluminiumoxid durch gemahlenen Foliengraphit (Korngröße 100 µm) ersetzt. Hierdurch sollte festgestellt werden, inwieweit sich durch den höheren Graphitanteil weitere Verbesserungen in den Eigenschaften der Mischung und insbesondere in der Wärmeleitfähigkeit und Schirmdämpfung der Spachtelmasse ergeben. In der Zusammensetzung der neuen Mischung wurde zudem das bis dato eingesetzte Bindemittel durch ein neues Bindemittel vom Typ Acronal 734 ausgetauscht. Dieses neue Bindemittel hat sich in einer Reihe von Versuchen ebenfalls als sehr geeignet für die Entwicklung der angestrebten Spachtelmasse herausgestellt. Die jeweiligen Einwaagen wurden bei der Versuchsmischung 5 von der Versuchsmischung 4 übernommen, ebenso die bewährte Verwendung der weiteren Funktionsadditve (Entschäumer, Verdickungsmittel, Zellulose).

Die Versuchsmischung 5 ließ sich wiederum handwerklich wie auch maschinentechnisch sehr gut herstellen und verarbeiten. Die entsprechend vorliegenden Oberflächen konnten wiederum auf die Qualitätsstufen 3 - 4 geschliffen werden. Nachdem sich Foliengraphit im Gegensatz zu Aluminiumoxid quasi auf Null ausziehen bzw. schleifen lässt (vergl. Graphitbleistift ohne Tonanteil) war das Erreichen der Qualitätsstufe 4 erkennbar einfacher zu bewerkstelligen.

Das Auftragen von Farben, Tapeten und Fliesen war auch auf die Flächen der Versuchsmischung 5 problemlos durchzuführen. Die zur Verifizierung dieser Ergebnisse durchgeführten Haftzugprüfungen bestätigten den bis dato sehr guten Gesamteindruck dieser Versuchsmischung. Als Ergebnis dieser Haftzugprüfungen konnte festgestellt werden, dass die Oberflächen der Versuchsmischung 5 über so hohe Abreißfestigkeiten verfügten, dass beim Abziehen des aufgeklebten Prüfstempels regelmäßig die Gipsschicht, d.h. die Kernlage der GK-Platten, ein Kohäsionsversagen aufwies.

In Versuchen zum Entfernen von Fliesen konnte festgestellt werden, dass sich zwischen einem Standard-Fliesenkleber und einer Oberfläche aus den Versuchsmischungen 4 und 5 eine so hohe physikalische Verbindung einstellt, die dazu führt, dass die Fliesen nur mit großem Aufwand und meist nur durch zerstören entfernt werden konnten

Neben diesen Versuchen wurden mit Blick auf eine breite Anwendung der neuen Spachtelmasse (beschichten von Mauerwerk aus z. B. Ziegeln) weitergehende Versuche zum Einbetten von Geweben und Vliesen aus Glasfaser und Mischgeweben (80 Gew. % Glasfaser und 20 Gew. % Kohlefaser) durchgeführt. Als Ergebnis konnte festgestellt werden, dass sich die verwendeten und im Trockenbau gängigen Gewebe und Vliese, mit einem Flächengewicht im Bereich von 120 g/m² -220 g/m², sehr gut in beide Spachtelmassen einbetten ließen. Eine Beschichtung von Mauerwerk ist somit mit beiden Mischungen gegeben.

Zur Bestimmung der Wärmeleitfähigkeit wurden an der Versuchsmischung 4 wieder Hot-Disk-Messungen durchgeführt. Gemäß der Messergebnisse liegt die Wärmeleitfähigkeit der Versuchsmischung 4 mit λ = 2,289 W/mK auf einem sehr hohen Niveau und deutlich über dem Wert von λ = 0,9654 W/mK der Versuchsmischung 3. Die Ursache für die Steigerung der Wärmeleitfähigkeit zwischen den Mischungen 3 und 4 lässt sich mit dem Austausch der Glas-Bubbles durch das Aluminiumoxidpulver erklären. Mit diesem Wert in der Wärmleitfähigkeit liegt die Versuchsmischung 4 auch deutlich über der Wärmeleitfähigkeit von Standard-Spachtelmassen, die ca. λ = 0, 25 W/mK betragen.

Die Wärmeleitfähigkeit der Versuchsmischung 5 wurde in Verbindung mit den durchgeführten thermographischen Untersuchungen eines Fußbodentemperiersystems bestimmt. Hierbei ergaben die thermographischen Messungen (Messapparatur der Firma Flir) eine durchschnittliche Wärmeleitfähigkeit für die Versuchsmischung 5 von bis zu λ = 7,82 W/mK.

Mit diesen Versuchen konnte, in Verbindung mit dem aufgebauten Fußbodensystem, sehr eindrucksvoll die schnelle Aufheizung des Bodens nachgewiesen werden. Im Vergleich zu den Messungen mit der Versuchsmischung 3 zeigt sich, dass bei annähernd gleichen Versuchsbedingungen die Temperatur des Fußbodens nach einer Stunde um rd. 6 °C höher liegt. Lag die Temperatur des Fußbodens bei der Versuchsmischung 3 nach einer Stunde bei rd. 17 °C, so stieg diese unter Verwendung der Versuchsmischung 5 in diesem Zeitraum auf rd. 23,2 °C.

Insgesamt lässt sich feststellen, dass sich durch den Einsatz dieser hochwärmeleitenden Spachtelmasse in der Gebäudetechnik die für das Leben und Arbeiten erforderlichen Temperaturen wesentlich schneller erreichen lassen, einhergehend mit einer signifikanten Energieeinsparung, einer effizienteren Nutzung von sekundären Energiequellen und einer deutlichen Steigerung der Wohnqualität.

Der Vergleich der Messkurven zeigt sehr deutlich die Steigerung der Schirmdämpfung von der Versuchsmischung 3 bis zur Versuchsmischung 5.

Unter Berücksichtigung der Tatsache, dass die derzeit marktgängigen Spachtel- und Putzmassen nahezu keine Schirmdämpfung aufweisen, sind wie bereits ausgeführt, die Schirmdämpfungseigenschaften der Versuchsmischung 3 als großer Erfolg zu bewerten. Mit einer durchschnittlichen Schirmdämpfung im Bereich von 20 kHz - 4 GHz von rd. 7 dB, werden in diesem Frequenzbereich bereits 80 % der elektromagnetischen Strahlung abgeschirmt. Im Bereich von 650 MHz bis 18 GHz liegt die durchschnittliche Dämpfung der Versuchsmischung 3 zwischen 3 dB und 10 dB, was eine Abschirmung von rd. 50 % - 90 % der elektromagnetischen Strahlung zur Folge hat (s. Abb. 30). Diese bereits sehr guten Werte, werden von der Versuchsmischung 4 und insbesondere von der Versuchsmischung 5 nochmals deutlich übertroffen.

So liegen die Dämpfungswerte dieser Versuchsmischungen im Frequenzbereich von 20 kHz bis 4 GHz bei der Versuchsmischung 4 bei rd. 13 dB und bei der Versuchsmischung 5 bei rd. 32 dB. Diese hohen Dämpfungswerte bedeuten für den Bauherrn bzw. Nutzer eines Gebäudes eine beeindruckende Abschirmung elektromagnetischer Strahlen in der Größenordnung von 95,0 % bei der Versuchsmischung 4 und von 99,94 % bei der Versuchsmischung 5. Erweitert man diese Betrachtung auf den Frequenzbereich zwischen 650 MHz und 18 GHz, so liegt die Schirmdämpfung gemäß der Messung nach IEEE-STD 299-2006 bei der Versuchsmischung 4 im Bereich zwischen 38 dB und 48 dB und bei der Versuchsmischung 5 zwischen 47 dB und 58 dB (s. Abb. 30). Bezieht man diese Dämpfungswerte wiederum auf die Abschirmung, so lässt sich feststellen, dass mit der Versuchsmischung 4 in diesem hohen Frequenzbereich zwischen 99,98 % und 99,997 % und bei der Versuchsmischung 5 zwischen 99,996 % und 99,9997 % der elektromagnetischen Strahlen abgeschirmt werden. Diese hervorragenden Dämpfungseigenschaften der beiden Spachtelmassen zeigen sich auch in Verbindung mit dem Einsatz von Geweben. Mit diesen Messreihen sollte auch die Anwendung der neuen Spachtelmasse zur Airless-Beschichtung von gemauerten Wänden, in dessen Zusammenhang meist Gewebe aus Glasfaser- bzw. Mischfasern in die Spachtelschicht eingelegt werden, berücksichtigt werden. Die in der Abbildung 31 dargestellten Messreihen zeigen wiederum die sehr hohen Schirmdämpfungen der Versuchsmischungen 4 und 5.

Zusammenfassend hier die Eigenschaften der erfindungsgemäßen Baustoffmischung, die insbesondere als Spachtel -oder Putzmasse Verwendung findet:
- Entwicklung einer graphitmodifizierten Spachtelmasse mit einer Wärmeleitfähig von λ ≥ 1 W/mK , insbesondere λ ≥ 3 W/mK
- Sämtliche Standard-Airlessgeräte mit Düsendurchmesser 90 µm - 110 µm und Arbeitsdrücke 100 bar - 250 bar können eingesetzt werden
- Es werden Oberflächengüten von Q1, Q2, aber auch Q3 - Q4 erreicht
- Mit der neu entwickelten Spachtelmasse wurde eine hervorragende Schirmdämpfung von bis zu 58 dB bereits bei einer Schichtdicke von rd. 1,5 mm erreicht

Zudem ist die neue Spachtelmasse sehr gut geeignet zum Auftragen von Farben, Tapeten und Fliesen und zur Herstellung von Flächentemperiersystemen in der Gebäudetechnik. Mit diesem neuen Produkt ergeben sich für uns neue Geschäftsfelder in den Bereichen der Temperierung und Schirmung von Gebäuden. Derzeit liegen erste Anfragen von Architekten zur Wohnraumgestaltung in Verbindung mit der Abschirmung von elektromagnetischen Strahlen (Elektrosmog) und dem zeitgemäßen Aufbau von Flächentemperiersystemen vor.

Der Erfindungsgedanke beschreibt eine Baustoffmischung mit hoher Wärmeleitfähigkeit und Schirmdämpfung, welcher ohne Zuschlagstoffe wie Zement, Sand, Gips, Kalk und Lehm ausgestattet ist.

Zum Erreichen der hohen Wärmeleitfähigkeit und Schirmdämpfung werden Funktionsadditive wie
- gemahlener Naturgraphit
- expandierter Graphit
- gemahlener Foliengraphit
- synthetischer Graphit und
- Ruße
- elektrisch leitfähige Fasern wie z. B. Kohlenstofffasern
als Einzeladditiv oder in Kombination miteinander eingesetzt. Das Mischungsverhältnis der einzelnen Additivfraktionen kann auf die jeweiligen Anforderungen angepasst werden.

Die Baustoffmischung wird in Form einer Trocken- und Nassmischung vorzugsweise eingesetzt als Spachtel- und Putzmasse für die Gebäudetechnik. Die Verarbeitung der Baustoffmischung ist sowohl handwerklich als auch mittels Airless- und Putzanlagen (hohe Pumpfähigkeit der Mischung) möglich. Durch die Verwendung des Zuschlagstoffes Graphit (auf Null ausziehbar) wird die Herstellung von Oberflächenqualitäten in den Güteklassen Q3 - Q4 möglich. Die Baustoffmischung erlaubt auch die Herstellung von nichttragenden Bauelementen wie z. B. Fassadenplatten oder Vormauersteinen. Die Baustoffmischung lässt sich auch durch die Zugabe von Phasenwechselmaterialien (PCM) als latenter Wärmespeicher (Wärmespeicherschicht, Wärmespeichersteine) ausbilden.

Durch die verwendeten Acrylat-Binder: in der Baustoffmischung haftet diese auf nahezu allen Untergründen (vorteilhaft bei der Renovierung von Gebäuden).

Die nachfolgende Tabelle stellt nochmals die verschieden erfindungsgemäßen Versuchsmischungen der Baustoffmischung zusammen:

| **Versuchsmischung** | | | **1** | **2** | **3** | **4** | **5** |
|---|---|---|---|---|---|---|---|
| **Graphitmodifikation** | | | | | | | |
| Expand. Graphitflocken | | 200 - 2.000 µm | 80 | | | | |
| Foliengraphit | | 100 µm | | | | | 30 |
| Natugraphit | | 5 µm | | 15 | 20 | 20 | 20 |
| Synthetischer Graphit | | 0 - 400 µm | | 30 | 40 | 40 | 40 |

| **Bindemittel** | | | | | | | |
|---|---|---|---|---|---|---|---|
| Bindemittel | | (5/13) | 20 | | | | |
| Bindemittel | | (1/13) | | 25 | 6 | 6 | |
| Bindemittel | | Acronal 734 | | | | | 6 |

| **Funktionsadditive** | | | | | | | |
|---|---|---|---|---|---|---|---|
| Trasspulver | | | | 30 | | | |
| Glas-Bubbles, Parover | | 13 - 100 µm | | | 30 | | |
| Aluminiumoxid | | Martoxid | | | | 30 | |
| Entschäumer | | Foamstar | | | 1,5 | 1,5 | 1,5 |
| Verdickungsmittel | | Pangeel FF | | | 2 | 2 | 2 |
| Zellulose | | Tylose | | | 0,5 | 0,5 | 0,5 |

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Baustoffmischung, insbesondere Spachtel- oder Putzmasse, dessen Trockenmasse zwischen 30 und 95 Gew % Graphit, zwischen 4 und 30 Gew% Acrylat-Bindemittel und zwischen 0 und 40 Gew % =unktionsadditive aufweist.

2. Baustoffmischung gemäß Anspruch 1, **dadurch gekennzeichnet, dass** als Graphit verschiedene Graphitmodifikationen wie expandierte Graphitflocken, Foliengraphit, Naturgraphit oder synthetischer Graphit vorgesehen ist.

3. Baustoffmischung nach einem der vorhergehenden Ansprüche, **dadurch gekennzeichnet, dass** die Baustoffmischung zwischen 3 und 40 Gew % Funktionsadditive enthält, wobei als Funktionsadditiv mindestens eines der nachfolgend genannten Materialien vorgesehen ist: Trasspulver, Glas-Bubbles, Aluminiumoxid, Entschäumer, Magnetit, Verdickungsmittel, Zellulose, Kunststoffadditiv.

4. Baustoffmischung nach einem der vorhergehenden Ansprüche, **dadurch gekennzeichnet, dass** die Baustoffmischung als Schicht aufgetragen in einer Schichtdicke von ca. 1,5 mm eine Schirmdämpfung von mehr als 10 dB, insbesondere mehr als 30, 40 oder 50 dB aufweist.

5. Baustoffmischung nach einem der vorhergehenden Ansprüche, **dadurch gekennzeichnet, dass** die Baustoffmischung eine Wärmeleitfähigkeit λ>1W/(mK), insbesondere λ>3W/(mK) aufweist.

6. Flächenheizung, bestehend aus einer Tragstruktur und einer Heizquelle sowie einer Abdeckschicht , wobei die Abdeckschicht aus einer Baustoffmischung nach einem der vorhergehenden Ansprüche 1 bis 5 gebildet ist.

7. Flächenheizung nach Anspruch 6, **dadurch gekennzeichnet, dass** die Heizquelle in der Abdeckschicht integriert ausgebildet ist.

8. Verwendung einer Baustoffmischung nach einem der vorhergehenden Ansprüche 1 bis 5, beziehungsweise eines hieraus hergestellten Baustoffes als Abschirmmaterial für elektromagnetische Strahlung und/oder als Wärmeenergie verteilendes Material.

9. Baustoff welches zumindest teilweise aus einer Baustoffmischung nach einem der vorhergehenden Ansprüche 1 bis 5 gebildet ist.

10. Baustoff nach Anspruch 9, **dadurch gekennzeichnet, dass** der Baustoff zwischen 20 und 60 Gew % Wasser enthält.

11. Baustoff nach einem der Ansprüche 9 oder 10, **dadurch gekennzeichnet, dass** der Baustoff verarbeitungsbereit vorgehalten wird.

12. Bauelement, wie z.B. Fassadenplatte, Vormauerstein, Wärmespeicherelement, welches zumindest teilweise aus einer Baustoffmischung nach einem der vorhergehenden Ansprüche 1 bis 5 gebildet ist.

## Claims

1. Building material mixture, in particular filler or plaster compound, the dry matter of which has between 30 and 95 wt.% graphite, between 4 and 30 wt.% acrylic binder and between 0 and 40 wt.% functional additives.

2. Building material mixture according to claim 1, **characterised in that** various graphite modifications such as expanded graphite flakes, sheet graphite, natural graphite or synthetic graphite are provided as graphite.

3. Building material mixture according to any of the preceding claims, **characterised in that** the building material mixture contains between 3 and 40 wt.% functional additives, wherein at least one of the materials named below is provided as functional additive: trass powder, glass bubbles, aluminium oxide, anti-foaming agent, magnetite, thickener, cellulose, polymer additive.

4. Building material mixture according to any of the preceding claims, **characterised in that** the building material mixture, applied as layer with a layer thickness of approx. 1.5 mm, has a shielding effectiveness of more than 10 dB, in particular more than 30, 40 or 50 dB.

5. Building material mixture according to any of the preceding claims, **characterised in that the** building material mixture has a thermal conductivity λ > 1 W/(mK), in particular λ > 3 W/(mK).

6. Surface heating system, consisting of a support structure and a heat source and also a cover layer, wherein the cover layer is formed of a building material mixture according to any of the preceding claims 1 to 5.

7. Surface heating system according to claim 6, **characterised in that** the heat source is integrally formed in the cover layer.

8. Use of a building material mixture according to any of the preceding claims 1 to 5 or of a building material manufactured therefrom as shielding material for electromagnetic radiation and/or as material to distribute heat energy.

9. Building material that is formed at least in part of a building material mixture according to any of the preceding claims 1 to 5.

10. Building material according to claim 9, **characterised in that** the building material contains between 20 and 60 wt.% water.

11. Building material according to any one of claims 9 or 10, **characterised in that** the building material is held available ready for processing.

12. Building component, e.g. wall panel, facing brick, heat storage element, that is formed at least in part of a building material mixture according to any of the preceding claims 1 to 5.

## Revendications

1. Mélange de matériaux de construction, notamment produit de remplissage ou d'enduit, dont la masse sèche comprend entre 30 et 95 % en poids de graphite, entre 4 et 30 % en poids de liant d'acrylate et entre 0 et 40 % en poids d'additifs fonctionnels.

2. Mélange de matériaux de construction selon la revendication 1, **caractérisé en ce que** comme graphite sont prévus différentes modifications de graphite tels que des flocons de graphite expansés, du graphite en feuille, du graphite naturel ou du graphite synthétique.

3. Mélange de matériaux de construction selon l'une des revendications précédentes, **caractérisé en ce que** le mélange contient entre 3 et 40 % en poids d'additifs fonctionnels, comme additif fonctionnel étant prévu au moins un des matériaux énoncés ci-après : poudre de trass, bulles de verre, oxyde d'aluminium, agent antimousse, magnétite, épaississant, cellulose, additif pour matière synthétique.

4. Mélange de matériaux de construction selon l'une des revendications précédentes, **caractérisé en ce que** le mélange de matériaux de construction appliqué en couche avec une épaisseur de couche d'environ 1,5 mm, présente une atténuation de blindage de plus de 10 dB, en particulier de plus de 30, 40 ou 50 dB.

5. Mélange de matériaux de construction selon l'une des revendications précédentes, **caractérisé en ce que** le mélange de matériaux de construction présente une conductivité thermique λ > 1 W/(mK), en particulier λ >3W/(mK).

6. Chauffage surfacique consistant en une structure porteuse et une source chauffante ainsi qu'une couche de couverture, la couche de couverture étant formée à partir d'un mélange de matériaux de construction selon l'une des revendications précédentes 1 à 5.

7. Chauffage surfacique selon la revendication 6, **caractérisé en ce que** la source chauffante est formée de façon intégrée dans la couche de couverture.

8. Utilisation d'un mélange de matériaux de construction selon l'une des revendications précédentes 1 à 5, ou respectivement d'un matériau de construction fabriqué à partir de celui-ci, comme matériau de blindage de rayonnement électromagnétique et/ou comme matériau distribuant de l'énergie calorifique.

9. Matériau de construction qui est formé au moins partiellement à partir d'un mélange de matériaux de construction selon l'une des revendications précédentes 1 à 5.

10. Matériau de construction selon la revendication 9, **caractérisé en ce que** le matériau contient entre 20 et 60 % en poids d'eau.

11. Matériau de construction selon l'une des revendications 9 ou 10, **caractérisé en ce que** le matériau est mis à disposition prêt à l'emploi.

12. Elément de construction tel que, par exemple, une plaque de façade, une brique de parement, un élément accumulateur de chaleur, qui est formé au moins partiellement à partir d'un mélange de matériaux de construction selon l'une des revendications précédentes 1 à 5.
